# EUROPEAN PATENT APPLICATION

(11) **EP 3 566 865 A1**
(43) Date of publication of application: **13.11.2019**
(21) Application number: 18175325.2
(22) Date of filing: 31.05.2018
(51) Int. Cl.: B32B 27/06, B32B 5/18, B32B 27/40, D06N 3/14, B32B 37/00

(54) **STRATIFIED COMPOSITE MATERIAL WITH FOAM SUPPORTING LAYER AND PROCESS FOR OBTAINING IT**

(30) Priority: 11.05.2018 IT 201800005307
(71) Applicant: Lorenzi S.r.l., 35010 Vigonza (PD) (IT)
(72) Inventor: LORENZI, Lorenzo, 35010 VIGONZA (IT)
(74) Representative: Morabito, Sara

(57) **Abstract**

The invention is a stratified composite material specifically suited to be used for producing footwear, leather items, furnishing elements or objects, comprising at least two layers, a first supporting layer made of a thermoformable polymeric foam material and a second covering layer, and wherein said second covering layer is made of polyurethane, is obtained by spraying two-component polyurethane on at least one matrix and is successively coupled with said first supporting layer, thus obtaining a thermoformable stratified composite material. The present patent concerns also the process for obtaining said material.

## Description

The present patent concerns stratified materials, and more specifically it concerns a new stratified material provided with a foam supporting layer, intended especially for the production of footwear, leather items, furnishing elements or objects. The present invention concerns also the process for obtaining said stratified material.

Stratified materials are known, which are obtained by coupling two or more layers of identical or different materials.

A typical example of a stratified material is represented by plywood panels, in which several wooden sheets are laid with grain arranged crosswise with respect to each other and then joined together. The panel obtained is highly resistant and is not easily deformed with respect to each one of its three dimensions.

Another example of a stratified material is represented by the food wrapping sheets used in retail sale. These sheets are constituted by a sheet of paper with a polyethylene sheet coupled and joined to it.

The paper sheet provides the coupled sheet with a structure which allows labels to be applied thereto and makes it possible to write thereon with a pen.

The polyethylene sheet has a minimum thickness and prevents any contact between the food and the paper sheet, in addition to preventing the paper sheet from getting dirty and wet, and the ink from coming in contact with the food.

Coupled and/or stratified fabrics are known, which are obtained by joining two different fabrics with the aim to exploit the individual characteristics of each one of said fabrics.

For example, a first fabric is intended to be used on the inside of a clothing item and is suited to maintain a constant body temperature, while a second fabric is intended to be used on the outside of a clothing item and is suited to allow transpiration while at the same time guaranteeing impermeability.

Coupled materials are also known in which one of the layers can serve to strengthen the material itself and/or to add to its aesthetic value and/or to protect it from abrasion or wear, etc.

The subject of the present invention is a new stratified composite material provided with a foam supporting layer, specifically intended to be used for the production of footwear, leather items, furnishing objects or elements. The present invention concerns also the process for obtaining said stratified material.

One of the objects of the invention is to provide a new stratified material featuring high mechanical resistance, more specifically resistance to abrasion.

The present invention offers the advantage that the new material can be used for several possible applications, thanks to its three-dimensional shape, which also improves its aesthetic value.

Furthermore, thanks to the layer of foam material, the new material can be shaped in various manners and thus be used to create shaped objects, more specifically in the sector of leather items, footwear and furnishing elements.

These and other direct and complementary objects are achieved by the new stratified composite material with foam supporting layer, comprising at least two layers, a first supporting layer made of a thermoformable polymeric foam material and a second covering layer made of polyurethane, obtained by means of a process defined as "bycast", that is, by spraying two-component polyurethane on at least one matrix, and successively coupled with said first supporting layer.

Said covering layer is intended to remain visible.

Said supporting layer made of a foam polymer preferably has a thickness which varies from 0.5 mm to 10 mm.

Said supporting layer is made of a foam material, meaning that it has a significant percentage of void within its volume. Furthermore, said supporting layer can be with open cells, meaning with a path joining the air volumes, or with closed cells. The polymers constituting said supporting layer can be the following: polyurethane, polyethylene, chloroprene, SBR (styrene butadiene rubber) or EVA (ethylene vinyl acetate).

Said second covering layer, instead, is preferably constituted by 100% polyurethane, wherein the polyurethane used is obtained from the reaction of the reactive components, isocyanate and polyol.

The process for obtaining the new stratified material comprises the following steps:
1. preparing said first supporting layer;
2. spraying the reactive components - isocyanate and polyol - on one or more matrices;
3. coupling said first supporting layer with said second covering layer; the support is pressed by means of metallic cylinders and placed in contact with the reactive two-component polyurethane arranged on the matrix, so that this contact produces the coupling between the two layers;
4. separating said covering layer from said matrix.

Said one or more matrices are preferably silicone-based and their surface geometry is the geometry to be obtained on the finished product.

During said spraying step, polyol is sprayed on said one or more matrices together and simultaneously with isocyanate.

The stratified material obtained from the new process is highly resistant to abrasion and furthermore has also a high aesthetic value, owing to its three-dimensional shape, which is obtained by means of said first supporting layer made of a thermoformable foam material and by spraying the reactive components on the matrices.

The material obtained in this way is thus especially suited to be shaped through a successive thermoforming process and to be used in the sector of footwear, leather items, furniture, clothing items.

These are the schematic outlines which are sufficient for a person skilled in the art to carry out the invention, consequently during the practical application of the invention changes may be made that do not affect the substance of the innovative concept disclosed herein.

Therefore, with reference to the preceding description, the following claims are expressed.

## Claims

1. Stratified composite material especially suited to be used for producing footwear, leather items, furnishing elements or objects, comprising at least two layers, of which:
• a first supporting layer made of a thermoformable polymeric foam material,
• a second covering layer,
and wherein said second covering layer is made of polyurethane, is obtained by spraying two-component polyurethane on at least one matrix and is successively coupled with said first supporting layer, thus obtaining a thermoformable stratified composite material.

2. Stratified material according to claim 1, **characterized in that** said first supporting layer has open cells.

3. Stratified material according to claim 1, **characterized in that** said first supporting layer has closed cells.

4. Stratified material according to any of the preceding claims, **characterized in that** the polymers constituting said supporting layer can be the following: polyurethane, polyethylene, chloroprene, SBR (styrene butadiene rubber) or EVA (ethylene vinyl acetate).

5. Stratified material according to claim 1, **characterized in that** said second covering layer is made of 100% polyurethane, wherein the polyurethane used is obtained from the reaction of the reactive components, isocyanate and polyol.

6. Process for obtaining a stratified material, **characterized in that** it comprises the following steps:
• preparing a first supporting layer;
• spraying the reactive components - isocyanate and polyol - on one or more matrices so as to form a second covering layer made of 100% polyurethane;
• coupling said first supporting layer with said second covering layer;
• separating said covering layer from said matrix.

7. Process for obtaining a stratified material according to claim 6, **characterized in that** the surface geometry of said one or more matrices is the geometry to be obtained on the finished product.

8. Process for obtaining a stratified material according to claim 6 or 7, **characterized in that** said one or more matrices are made of silicone.

9. Process for obtaining a stratified material according to claim 6, **characterized in that** during said spraying step polyol is sprayed on said one or more matrices together and simultaneously with isocyanate.

10. Process for obtaining a stratified material according to claim 6, **characterized in that** said coupling step is performed by pressing said supporting layer after placing it in contact with a layer of reactive polyurethane material arranged on said matrix, wherein said contact produces the coupling between the two layers.
